(19) **Europäisches Patentamt**

**European Patent Office**

**Office européen des brevets**

(11) **EP 1 531 590 A1**

(12) **EUROPEAN PATENT APPLICATION**

(43) Date of publication:
**18.05.2005 Bulletin 2005/20**

(51) Int Cl.⁷: **H04L 25/02**, H04L 25/03

(21) Application number: **03078544.8**

(22) Date of filing: **11.11.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **STMicroelectronics Belgium N.V.**
**1930 Zaventem (BE)**

(72) Inventor: **Wernaers, Yves**
**1790 Teralfene (BE)**

(74) Representative: **Bird, William Edward et al**
**Bird Goen & Co.,**
**Klein Dalenstraat 42A**
**3020 Winksele (BE)**

(54) **Method and apparatus for channel equalisation with estimation of the channel impulse response length**

(57)     An aspect of the present invention is the use of two criteria in channel estimation, e.g. a value related to the length of an estimated Channel Impulse Response (*CIR*) and a value related to a noise content of the received signal, e.g. a Signal-to-Noise Ratio (*SNR*).

These parameters can be used for the post-processing algorithm. An advantage of the present invention is that it is much more robust against long channels and/or high noise contents in received signals. Additionally it has moderate implementation complexity.

Fig. 5

EP 1 531 590 A1

## Description

The present invention relates to methods and apparatus for channel estimation and in particular for improving the quality of the channel estimation algorithms at the receiving side of telecommunication systems communicate use training sequences. The present invention also relates computer program products for channel estimation for a received signal in which data is sent in frames and training sequences are provided. The present invention particularly relates to telecommunications networks in which data is sent in frames and training sequences are provided, e.g. especially to multicarrier systems such as OFDM or COFDM telecommunications systems.

## Technical Background

There are many forms of known telecommunications systems including wireless based and wireline systems. Such systems may be used to transfer voice or data systems across a variety of channels, e.g. satellite, optical fibre, coaxial cable, cellular wireless, point-to-point microwave systems. In general there is a transmitter for transmitting a signal and a receiver for receiving the signal as part of the system. To improve reception, the transmitted signal may be coded in a variety of ways. A digital signal received at a receiver is often distorted due to a dispersive channel over which it is transmitted and some method is needed in order to extract any message conveyed in the signal. There are various ways in which compensation for the dispersive effect of the channel can be achieved. For instance, a known symbol sequence (e.g. a training symbol sequence) may be compared with the known sequence in the received signal. This may be called cross-correlation. Training sequences are widely used for this purpose. Alternatively, if the transmitted signal includes a repeated or cyclic sequence, such as a cyclic symbol prefix as can occur in OFDM (Orthogonal Frequency Division Multiplex) systems, the cyclic sequence may be autocorrelated with the same prefix received at a different time. OFDM systems are described in the book "OFDM for Wireless Multimedia Communications", R. Van Nee and R. Prasad, Artech House, 2000.

Multi-carrier modulation is a well known means of transmitting digital data by splitting that data into fixed-length data "blocks" or "symbols" each having the same number of sub-blocks or bits. Analogue transmission of these blocks is carried out using a set of carrier signals. For example, there can be a carrier for each of the sub-blocks in one block. The carriers have frequencies which are equally spaced across the transmission band of the transceiver. The carrier frequencies can be orthogonal or not. One such arrangement is called DMT (Discrete multi-tone). DMT modems transmit data by dividing it into several interleaved bit streams, and using these bit streams to modulate several carriers. DMT is used for examples in DSL (Digital subscriber Line) which enables high speed digital data transport over telephone lines. Some varieties of DSL such as ADSL (Asymmetric Digital Subscriber Line), overlay the carriers on the analogue POTS (Plain Old Telephone Service) service. ADSL is useful so that telephone companies can reuse most of their installed wiring for the introduction of new services. By using DMT (Discrete Multi Tone) modulation, carriers with a higher signal to noise ratio (SNR) are allowed to carry more bits than carriers with a low SNR, enabling higher transmission rates. ADSL is described in "ADSL, VDSL and Multicarrier Modulation", John Bingham, Wiley, 2000.

A significant limitation in this and any multiple carrier system is intersymbol interference (ISI). This is essentially caused by delays in the transmission path which can vary with frequency. Since a typical signal pulse can be regarded as having components at many frequencies, the effect is to spread or "disperse" the pulse in the time domain, and this spreading can cause overlap with neighbouring pulses. The average duration of the delays is not the principal issue here, it is the variation or range of the delays, varying with time and frequency for example, which causes the "dispersion" and hence ISI.

A known countermeasure to intersymbol and intercarrier interference due to transmission of the DMT symbols over a channel between multicarrier transmitter and multicarrier receiver involves adding a cyclic extension (CE, also called cyclic prefix, CP) to each DMT symbol. The data rate, however, reduces proportionally to the length of the cyclic prefix that is added to the DMT symbols so that the length of the cyclic extension of DMT symbols is preferably limited. The cyclic prefix should preferable be long enough so that channel delay or spreading of one symbol can be absorbed into the cyclic prefix time period. In this way intersymbol interference can be reduced. If the channel impulse response is longer than the cyclic extension, some ISI will remain.

Another known countermeasure to shorten the channel's impulse response is a time domain equalizer. Time domain equalizers (TEQ) typically contain a set of adaptive taps whose values are set in accordance with a mean square error (MSE) criterion. In a typical receiver, the TEQ is followed by a serial to parallel converter which also acts to extract the cyclic prefix from the multicarrier symbol to output a non-extended multicarrier symbol. This is applied to a Discrete Fourier Transformer (DFT), typically implemented as a fast Fourier transformer (FFT') for time to frequency domain conversion, since the FFT algorithm is an efficient way of calculating a DFT. This is followed by a frequency domain equalizer FEQ which typically contains one complex tap per carrier to compensate for each carrier any remaining phase rotation and attenuation due to transmission over the channel. The outputs are fed to a demapper DMAP which decodes the appropriate number of bits from each carrier using a selected constellation scheme, and the bits are converted to a serial stream by parallel to serial convertor P/S. FFT is described in "Understanding FFT applications", A. Zonst, Citrus Press, 1997.

However, in systems which select a certain tap number for the channel equaliser, the effect is an estimate using only a certain amount of the received signal. Due to the limited number of the taps the signal is truncated. If the number of taps is constant, then the truncation is always the same. However, mobile terminals change their location widely - from indoor to outdoor, from region-to-region and even country-to-country. Thus, the channels they are likely to meet can vary widely in their properties. By using fixed tap lengths prior art solutions either often have a limitation on the channel impulse response length which is used in the receiver. Exceeding this limitation can result in a poor channel estimation.

**Summary of the Invention**

It is an object of the present invention to provide a channel estimation unit and method for use in a telecommunications system using training sequences which isrobust against different types of communication channel.

The present invention provides a channel equalisation unit for processing a signal received over a channel, the unit comprising:

means for estimating a first value related to a noise content of the received signal, means for estimating a second value related to the length of an impulse response of the channel, and means adapting parameters for channel equalisation based on the estimated first and second values. The unit may further comprise means to calculate an estimate of a channel transfer function in the frequency domain. The means for estimating a first value related to a noise content of the received signal may comprise means to calculate a signal to noise ratio of the received signal. If the signal comprises a training sequence, the means for estimating a second value related to the length of an impulse response of the channel may be adapted to calculate a cross-correlation of the part of the received signal containing the training sequence and the training sequence. The means for estimating a second value related to the length of an impulse response of the channel may also calculate an estimate of the channel impulse response from the estimate of a channel transfer function in the frequency domain. The means for estimating a second value related to the length of an impulse response of the channel may also calculate the length in accordance with the signal strength of the received signal compared to a noise value.

The means adapting parameters for channel equalisation may be adapted to:

a) if the CIR length is large compared to a cyclic prefix present in the signal the channel equalising unit is set to compensate for the channel using a coarse channel estimation,
b) if the noise level is very low, the channel equalising unit uses the estimate of the channel transfer function in the frequency domain to process the received signal,
c) if there is a higher amount of noise, then the length of the estimated impulse response used to process the received signal is adapted to the CIR length.
d) if there is a high amount of noise then the length of the estimated impulse response used to process the received signal is less than the CIR length.

The unit may include, for example, a Least Square estimator or a Maximum Likelihood estimator.
The unit of the present invention may be located in a receiver of a telecommunications device.
The present invention also provides a method of processing a signal received over a channel to provide channel equalisation, the method comprising:

estimating a first value related to a noise content of the received signal, estimating a second value related to the length of an impulse response of the channel, and
adapting parameters for channel equalisation based on the estimated first and second values. The method may further comprise calculating the estimate of a channel transfer function in the frequency domain. Estimating a first value related to a noise content of the received signal may comprise calculating a signal to noise ratio of the received signal. If the signal comprises a training sequence, estimating a second value related to the length of an impulse response of the channel may comprise calculating a cross-correlation of the part of the received signal containing the training sequence and the training sequence. Estimating a second value related to the length of an impulse response of the channel may comprise calculating an estimate of the channel impulse response from the estimate of a channel transfer function in the frequency domain. Estimating a second value related to the length of an impulse response of the channel may also comprise calculating the length in accordance with the signal strength of the received signal compared to a noise value.

The step of adapting parameters for channel equalisation may comprise:

a) if the CIR length is large compared to a cyclic prefix present in the signal the effect of the channel

**EP 1 531 590 A1**

is compensated using a coarse channel estimation,

b) if the noise level is very low, the effect of the channel is compensated using the estimate of the channel transfer function in the frequency domain to process the received signal,

c) if there is a higher amount of noise, then the length of the estimated impulse response used to process the received signal is adapted to the CIR length.

d) if there is a high amount of noise then the length of the estimated impulse response used to process the received signal is less than the CIR length.

The present invention also includes a software product which in executable form executes any of the methods of the present invention when run on a suitable processing device. The present invention also includes a machine readable datacarrier storing the software product.

An aspect of the present invention is the use of two criteria in channel estimation, e.g. a value related to the length of an estimated Channel Impulse Response (*CIR*) and a value related to a noise content of the received signal, e.g. a Signal-to-Noise Ratio (*SNR*). These parameters can be used for the post-processing algorithm. An advantage of the present invention is that it is much more robust against long channels and/or high noise contents in received signals. Additionally is has moderate implementation complexity.

**Brief Description of the Drawings**

Fig. 1 shows and example of a preamble sequence, e.g. as used in a Hiperlan/2 OFDM wireless system.

Fig. 2 shows a channel impulse response (CIR) of 15 taps long.

Fig. 3 shows a channel impulse response (CIR) with noise content. The round dots represent the real CIR and the rectangular dots represent the noise on the initial estimation. A smoothing algorithm removes as much noise as possible without removing signal, e.g. it truncates the initial CIR length estimation to the real CIR length (dotted line mask) as used in embodiments of the present invention.

Fig. 4 shows a CIR with a lot of noise. A smoothing algorithm in accordance with an embodiment of the present invention removes as much noise as possible by truncating the CIR without introducing extra noise by removing too much signal. A trade-off is made as represented by the dotted line mask. Same drawing conventions as in Figure 4

Fig. 5 shows a part of a channel equaliser in accordance with an embodiment of the present invention.

**Detailed Description of the illustrative embodiments**

The present invention will be described with reference to certain embodiments and to certain drawings but the present invention is not limited thereto but only by the attached claims. The present invention relates to methods and apparatus for channel estimation and in particular for improving the quality of the channel estimation algorithms at the receiving side of telecommunication systems in which communications use training sequences.

It is particularly relevant to telecommunications systems in which communication channels are subject to dispersion and noise. It is therefore particularly relevant to wireless networks, e.g. satellite systems, mobile telephone systems, Metropolitan wireless access networks, wireless local area networks (LAN), and wireless wide area networks (WAN). The present invention particularly relates to telecommunications networks in which data is sent in frames and training sequences are provided, e.g. single an multicarrier systems, especially to OFDM and COFDM telecommunications systems.

The present invention will also be mainly described with reference to an OFDM system, but the present invention includes within its scope any other type of telecommunications system which makes use of a training sequence. In particular the methods and apparatus described below can be used with either circuit switched or packet switched systems and the application of any of these methods and apparatus to packet or circuit switched systems is included within the scope of the present invention.

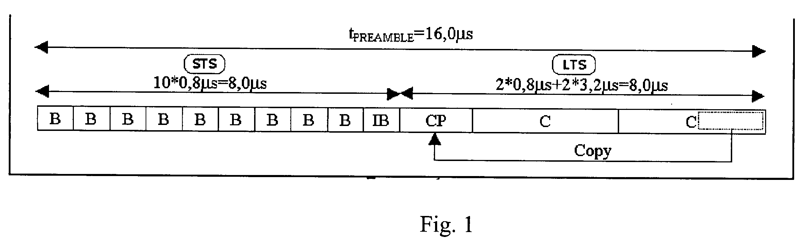

Channel estimation in some telecommunication systems is done on a known sequence, for example in a preamble (e.g. HIPERLAN), midamble (e.g. GSM) or postamble training sequence. An example of a known OFDM training sequence is shown in Fig. 1 and is typically used in HIPERLAN/2 OFDM systems as the up long preamble. The present invention can be applied to other sequences once the principles are understood. The sequence of Fig. 1 comprises a short training sequence (STS) having 9 repetitions of a training symbol B of 16 samples with duration of 800ns. The tenth symbol is the inverse of B (IB). The short training symbols are followed by a long training symbol (LTS) that is 8 microseconds long. The first 1.6 microseconds serves as a guard interval which is copied from the last 1.6 microseconds of this symbol. The OFDM preamble and data are modulated onto several carriers, generally each carrier having a carrier frequency higher than the symbol frequency of the OFDM signal.

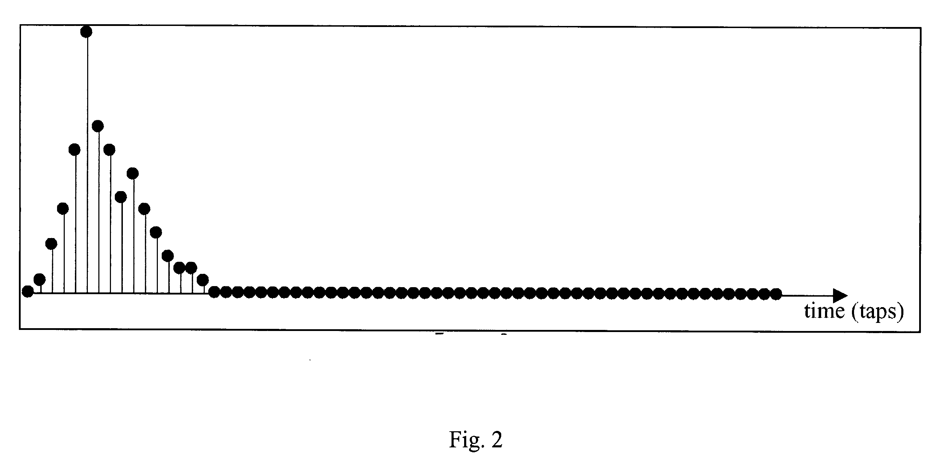

With a dispersive channel with no added noise, a received impulse signal may look as in Fig. 2. The signal has a certain channel impulse response (CIR) length - that is a certain time span before the received signal of a transmitted impulse signal drops effectively to zero, or is not distinguishable over the background noise. Any operation of the channel may be analysed as the sum of a plurality of impulses, or in the case of a dispersive channel the superposition of a plurality of channels impulses responses (CIR). Ideally, a receiver channel should provide compensation and should make use of a channel estimation algorithm which allows for or uses all of the signals available within the channel impulse response length. However, practicalities limit the length of a delay line used as a filter in a channel equaliser resulting use of only a truncation of the signal after a certain time. This time before truncation is determined by the number of taps in the delay line. Provided the energy in the impulse response is small at the truncation time or the truncation time lies within a cyclic prefix, if present, the channel equalisation will probably be of good quality.

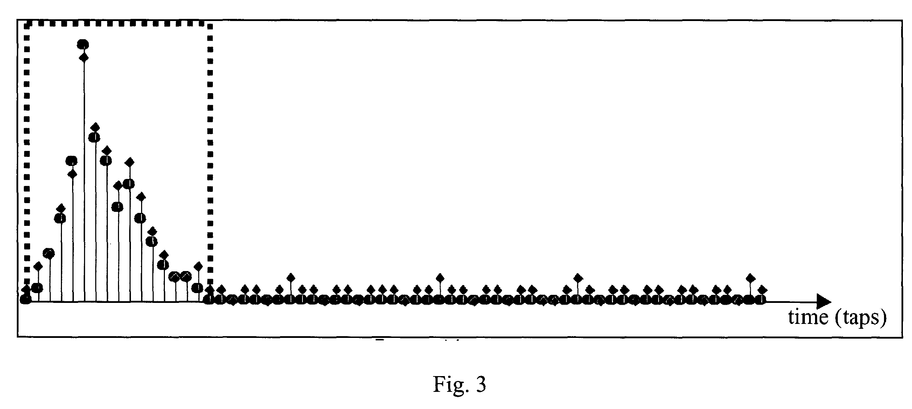

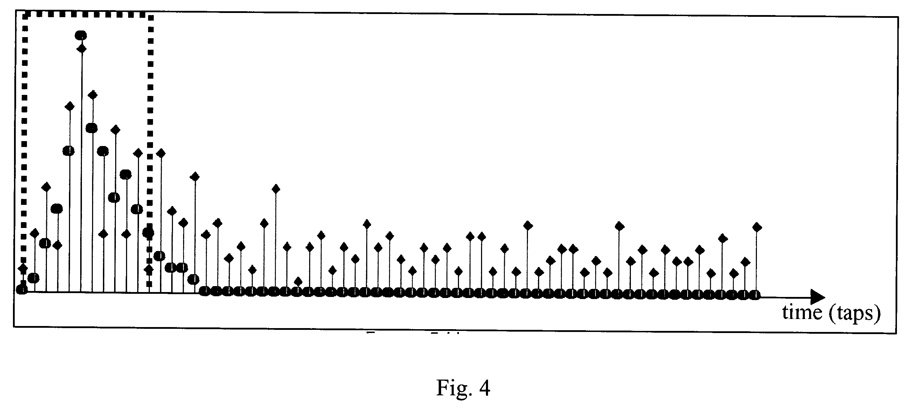

When a small amount of noise is present, as indicated in Fig. 3, the truncation can be selected to match with the received signal. That is the noise energy does not seriously affect the receipt and processing of a delayed signal. However, when the channel is not only dispersive but also significantly noisy as shown in Fig. 4, there is a trade-off between using more of the signal which includes more noise or restricting the taps on the equaliser so that only that part of signals is used with a reasonable signal to nose ratio, i.e. signals shortly after the start of the impulse response.

The above discussion illustrates and aspect of the present invention, namely the selection of parameters for channel estimation which provide an equivalent or better trade-off between noise and accuracy than prior art systems. In particular the present invention foresees that two decision criteria are used to guide the equalisation process: a value related to the noise in the received signal and a value related to the CIR length.

A coarse estimation of a channel can be performed in the frequency domain by simply dividing the received known sequence by the known sequence (see Equation 1 and Equation 2).

$$rx(t) = tx(t) \otimes h(t) + n(t)$$
$$\Leftrightarrow RX(f) = TX(f).H(f) + N(f)$$
$$\Rightarrow \tilde{TX}(f) \approx \frac{RX(f)}{\tilde{H}(f)}$$

*Equation 1*

$$rx(t) = lts(t) \otimes h(t) + n(t)$$
$$\Leftrightarrow RX(f) = LTS(f).H(f) + N(f)$$
$$\Rightarrow \tilde{H}(f) = \frac{RX(f)}{LTS(f)}$$

*Equation 2*

Equation 1 indicates that the received signal rx(t) as a function of time t is the transmitted signal tx(t) convoluted with the transfer function h(t) of the dispersive channel with the addition of a noise function n(t). After Fourier transformation into the frequency domain, the received signal RX(f) as a function of frequency f is given by the transmitted signal as a function of frequency TX(f) multiplied by the transfer function of the channel H(f) and the addition of a noise signal N(f). Ignoring noise, an estimate of the transmitted signal is given by the received signal divided by the estimate of the transfer function of the channel. In a practical case using a known training sequence such as the LTS of the preamble of Fig. 1, the estimate of the transfer function of the channel is given approximately by the received signal comprising the LTS divided by the known LTS signal.

This method assumes that the noise is effectively zero. Due to the noise, the coarse estimation of the channel transfer function in the frequency domain H(f) can be corrupted quite a lot and can be erroneous. Therefore, it has to be post-processed or "smoothed" in order to reduce the noise. Smoothing algorithms reduce the noise (in band and out of band) in the channel estimation. A side-effect can be that the CIR is truncated to a certain (fixed) length or truncation-length. For a channel with a long impulse response this truncation can actually introduce an effective noise component that is greater than the noise initially present. Therefore, one option according to an embodiment of the present invention is to choose as the truncation length (e.g. number of taps) a length related to the actual impulse response length. Accordingly, to determine the truncation length the CIR length is used and the CIR length is estimated for this purpose in accordance with embodiments of the present invention. However, when a lot of noise is present (e.g. low SNR) it can be better to remove the noise component by reducing the truncation length, e.g. by truncating earlier than the CIR length (see Fig. 4). Thus, in order to decide whether to reduce below the CIR length (e.g. less taps in the filter) a measure of the noise can be used as a guide or decision criterion. In embodiments of the present invention a signal to noise ratio (SNR) can be estimated for this purpose.

Individual embodiments of the present invention use a method for estimation of the CIR length. For example, the Inverse Fourier Transform (IFFT) of the initial channel estimation (possibly containing unused carriers in a multicarrier system) gives a measure for the CIR and so the channel length can be estimated. Alternatively, a cross-correlation of the known training sequence and the received signal containing the training sequence provides a similar result as the first method. To determine the CIR length, i.e. the point in the impulse response chosen to represent the end of the CIR, a criterion may be chosen such as when the energy of the received signal drops below the background noise level or is greater or smaller than the background noise level by a predetermined amount or ratio, e.g. % or dB value.

Individual embodiments of the present invention use a method for estimation of a noise value such as SNR. For example, when a training sequence consists of two identical symbols (C1 and C2), a measure for the SNR can be computed (see Equation 3).

$$
\begin{aligned}
SNR &\equiv \frac{SignalPower}{NoisePower} \\
\begin{cases}
Signal(n) &\approx \frac{|C_1(n)|^2 + |C_2(n)|^2}{2} \\
Noise(n) &\approx \frac{|C_1(n)|^2 - |C_2(n)|^2}{\sqrt{2}} \\
\end{cases} \\
\begin{cases}
SignalPower &\approx \sum_n |Signal(n)| \\
NoisePower &\approx \sum_n |Noise(n)| \\
\end{cases} \\
\Rightarrow SNR &\approx \frac{SignalPower}{NoisePower}
\end{aligned}
$$

*Equation 3 Example of SNR calculation*

In accordance with Equation 3, by dividing the addition of the squares of the absolute values of C1 and C2 divided by 2 by the subtraction of the squares of the absolute values of C1 and C2 divided by root 2, an estimate for SNR can be obtained.

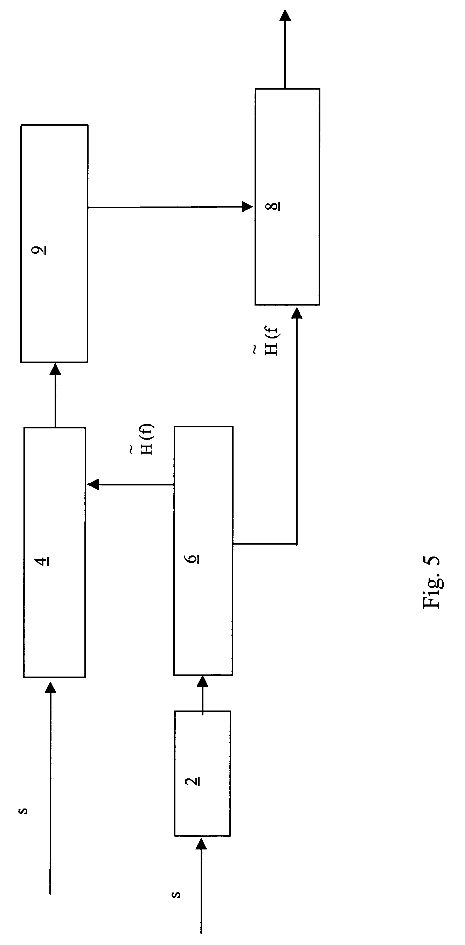

An example of a part of a generalised receiver 10 is shown in Fig. 5 in accordance with an embodiment of the present invention. The received signal s after suitable pre-processing is fed in parallel to an Fast Fourier Transform (FFT) unit 2 and a calculation unit 4. The calculation unit 4 calculates estimates of a noise value, such as a SNR, for example using an algorithm based on Equations 3 above, and a value related to a channel impulse response length obtained as described above with reference to Figs. 2 to 4. The FFT unit 2 applies the Fast Fourier Transform to the input signal to generate the same signal in the frequency domain. The output of the FFT unit 2 is sent to a coarse channel estimation unit 6, e.g. in accordance with Equations 1 and 2 above. An output of the coarse channel estimation 6 is an estimation of the transfer function H (f) which is supplied to an equaliser unit 8. The equaliser unit 8 preferably comprises a frequency equaliser (FEQ). The equaliser unit 8 may use the coarse estimate of the transfer function in the frequency domain H (f) to reconstruct an estimate of the transmitted signal. Alternatively, the equaliser unit 8, as instructed by a decision unit 9, may apply other equalising algorithms. A further output of the coarse estimation unit can be the FFT of the input signal. This output is supplied to the calculation unit 4 if the calculation unit 4 is adapted to calculate the Inverse Fourier Transform (IFFT) of the initial channel estimation H (f) in order to determine a suitable CIR length. The output values from the calculation unit 4 are a value relating to the CIR length and a value relating to the noise content of the input signal and these are sent to the decision unit 9. The decision unit 9 decides on the algorithm and its selection parameters which will be used by the equaliser unit 8.

The decision unit 9 uses the estimate of the noise content of the received signal and the estimate of a value related to the channel impulse response length to optimise the operation of the equaliser unit 8. The optimisation may be carried out using a predetermined algorithm. Such an algorithm may be as follows in order of priority of actions:

a) If the channel has a "long response", i.e. the CIR length is significant compared to a cyclic prefix if present, e.g. greater than 1.5 times the cyclic prefix, then there is a significant risk of inter-symbol interference (ISI). In this case, the equaliser unit 8 should is set to compensate for the channel using its normal operating parameters. This means that additional smoothing will not be performed on the coarse channel estimation.

b) If the noise level is very low, then the rough estimate obtained from the coarse channel estimation unit 6 may be sufficient and no further channel estimation may be needed. Alternatively, if the equaliser unit 8 has adaptable number of taps, these may be set to an optimum value, e.g. in accordance with the estimated value for the CIR length. The very low noise level may be represented by a signal to noise ratio (SNR) of at least 5 dB, preferably 10 dB and most preferably 15 dB above a reference level R. The very low noise level may be, e.g. represented by an SNR above 20dB.

c) If there is a medium amount of noise then the number of taps used in the equaliser unit 8 should be set to less than the CIR length. A medium amount of noise may be represented by an SNR value between the reference value R and a value 5 dB above the reference value, preferably 10 dB and most preferably 15 dB above a reference level R. A medium amount of noise may be represented by, e. g. an SNR below 20dB and above 5dB.

d) If the noise level is very high, a severe reduction in the number of taps in the equaliser unit 8 is set. For example the number of taps should be reduced to the value of CIR length over which the received signal is greater than the noise level see Fig. 4. The very high noise level may be represented by being equal to or below the reference level R. The very high noise level may be represented by, e.g. an SNR below 5dB.

The present invention can be used advantageously for all channel estimation units and methods which somehow constrain the CIR length, e.g. by having a fixed number of taps. Some examples of channel estimation and units methods which can be used as the fine channel estimation unit include:

- *Least Square estimator:* an assumption on the CIR length needs to be made. In accordance with the invention the assumption can be varied depending on the CIR length and the SNR.

- *Maximum Likelihood estimator:* an assumption on the CIR length needs to be made. In accordance with the invention assumption can be varied depending on the CIR length and the SNR. One particular type of maximum likelihood estimator uses the Viterbi algorithm. The operation of the Viterbi algorithm requires the input of the CIR. In accordance with the present invention the CIR length and a value of the noise content is used to decide on this input to the equaliser so as to reduce errors.

An equalisation unit in accordance with the present invention may be located in a receiver or transmitter of a telecommunications device such as a modem. It may also be supplied as a separate unit, e.g. in the form of an ASIC or insertable card, such as a PCB for inclusion in a telecommunications device. The PCB or card may include an embedded microprocessor.

The present invention also relates to software adapted to carry out any of the methods of the present invention when executed on a suitable processing device such as a microprocessor, a Programmable Logic Array, a Programmable Array Logic, Programmable Gate Array such as a Field Programmable Gate Array or equivalent. The software includes code segments, which when executed process a signal received over a channel to provide channel equalisation. Code segments of the software when executed estimate a first value related to a noise content of the received signal, estimate a second value related to the length of an impulse response of the channel, and adapt parameters for channel equalisation based on the estimated first and second values. Code segments of the software when executed calculate the estimate of a channel transfer function in the frequency domain. Code segments of the software when executed estimate the first value related to a noise content of the received signal by calculating a signal to noise ratio of the received signal. In the case that the signal comprises a training sequence, code segments of the software, when executed estimate the second value related to the length of an impulse response of the channel by calculating a cross-correlation of the part of the received signal containing the training sequence and the training sequence. Code segments of the software when executed may also estimate the second value related to the length of an impulse response of the channel by calculating an estimate of the channel impulse response from the estimate of a channel transfer function in the frequency domain. Code segments of the software when executed can also estimate the second value related to the length of an impulse response of the channel by calculating the length in accordance with the signal strength of the received signal compared to a noise value. Code segments of the software, when executed can adapt parameters for channel equalisation in accordance with at least two of the following:

a) if the CIR length is large compared to a cyclic prefix present in the signal the effect of the channel is compensated using a coarse channel estimation,
b) if the noise level is very low, the effect of the channel is compensated using the estimate of the channel transfer function in the frequency domain to process the received signal,
c) if there is a higher amount of noise, then the length of the estimated impulse response used to process the received signal is adapted to the CIR length.
d) if there is a high amount of noise then the length of the estimated impulse response used to process the received signal is less than the CIR length.

The software may be stored on a suitable machine readable data carrier, e.g. in executable form. The data carrier may be any suitable data carrier such as an optical disk, e.g. a CD- or DVD-ROM, a magnetic tape, a hard disk, a diskette, solid state memory, etc.

**Claims**

1. A channel equalising unit for processing a signal received over a channel, the unit comprising:

   means for estimating a first value related to a noise content of the received signal, means for estimating a second value related to the length of an impulse response of the channel, and means adapting parameters for channel equalisation based on the estimated first and second values.

2. The channel equalising unit according to claim 1, further comprising means to calculate an estimate of a channel transfer function in the frequency domain.

3. The channel equalising unit according to claim 1 or 2, wherein means for estimating a first value related to a noise content of the received signal comprises means to calculate a signal to noise ratio of the received signal.

4. The channel equalising unit according to any previous claim, wherein the signal comprises a training sequence and the means for estimating a second value related to the length of an impulse response of the channel calculates a cross-correlation of the part of the received signal containing the training sequence and the training sequence.

5. The channel equalising unit according to claim 2 or 3, wherein the means for estimating a second value related to the length of an impulse response of the channel calculates an estimate of the channel impulse response from the estimate of a channel transfer function in the frequency domain.

6. The channel equalising unit according to any previous claim, wherein the means for estimating a second value related to the length of an impulse response of the channel calculates the length in accordance with the signal strength of the received signal compared to a noise value.

7. The channel equalising unit according to any previous claim, wherein the means adapting parameters for channel equalisation is adapted to:

   e) if the CIR length is large compared to a cyclic prefix present in the signal the channel equalising unit is set to compensate for the channel using a coarse channel estimation,
   f) if the noise level is very low, the channel equalising unit uses the estimate of the channel transfer function in the frequency domain to process the received signal,
   g) if there is a higher amount of noise, then the length of the estimated impulse response used to process the received signal is adapted to the CIR length.
   h) if there is a high amount of noise then the length of the estimated impulse response used to process the received signal is less than the CIR length.

8. The channel equalising unit according to any previous claim wherein the unit is a Least Square estimator or a Maximum Likelihood estimator.

9. A method of processing a signal received over a channel to provide channel equalisation, the method comprising:

   estimating a first value related to a noise content of the received signal, estimating a second value related to the length of an impulse response of the channel, and
adapting parameters for channel equalisation based on the estimated first and second values.

10. The method according to claim 9, further comprising calculating the estimate of a channel transfer function in the frequency domain.

11. The method according to claim 9 or 10, wherein estimating a first value related to a noise content of the received signal comprises calculating a signal to noise ratio of the received signal.

12. The method according to any of claims 9 to 11, wherein the signal comprises a training sequence and estimating a second value related to the length of an impulse response of the channel comprises calculating a cross-correlation of the part of the received signal containing the training sequence and the training sequence.

13. The method according to claim 10 or 11, wherein estimating a second value related to the length of an impulse response of the channel comprises calculating an estimate of the channel impulse response from the estimate of a channel transfer function in the frequency domain.

14. The method according to any of claims 9 to 13, wherein estimating a second value related to the length of an impulse response of the channel comprises calculating the length in accordance with the signal strength of the received signal compared to a noise value.

15. The method unit according to any of claims 9 to 14, wherein adapting parameters for channel equalisation comprises:

   e) if the CIR length is large compared to a cyclic prefix present in the signal the effect of the channel is compensated using a coarse channel estimation,
   f) if the noise level is very low, the effect of the channel is compensated using the estimate of the channel transfer function in the frequency domain to process the received signal,
   g) if there is a higher amount of noise, then the length of the estimated impulse response used to process the received signal is adapted to the CIR length.
   h) if there is a high amount of noise then the length of the estimated impulse response used to process the received signal is less than the CIR length.

16. A telecommunications receiver comprising a channel equalising unit according to any of the claims 1 to 8.

**17.** Software product which executes any of the methods of claims 9 to 14 when executed on a processing device.

**18.** A machine readable data carrier storing the software product of claim 17.

$t_{\text{PREAMBLE}} = 16,0\mu s$

| STS | | | | | | | | | | LTS | | |
| --- | --- | --- | --- | --- | --- | --- | --- | --- | --- | --- | --- | --- |
| $10*0,8\mu s = 8,0\mu s$ | | | | | | | | | | $2*0,8\mu s + 2*3,2\mu s = 8,0\mu s$ | | |
| B | B | B | B | B | B | B | B | B | IB | CP | C | C |

Copy

Fig. 1

Fig. 2

Fig. 3

time (taps)

Fig. 4

EP 1 531 590 A1

Fig. 5

**European Patent Office**

## EUROPEAN SEARCH REPORT

Application Number

EP 03 07 8544

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/131537 A1 (SKAFIDAS EFSTRATIOS ET AL) 19 September 2002 (2002-09-19)<br><br>* paragraph [0009] *<br>* paragraph [0013] *<br>* paragraph [0016] *<br>* paragraph [0089] *<br>* paragraph [0108] * | 1-3,5,6, 8-11,13, 14,16-18 | H04L25/02 H04L25/03 |
| Y | | 4,7,12, 15 | |
| X | WO 02/43270 A (ERICSSON TELEFON AB L M) 30 May 2002 (2002-05-30)<br><br>* page 10, line 6 - line 10 *<br>* page 11, line 7 - line 14 *<br>* page 16, line 16 - line 18 * | 1,3,8,9, 11,14, 16-18 | |
| Y | US 6 522 706 B1 (BAHAI AHMAD REZA ET AL) 18 February 2003 (2003-02-18)<br>* figure 2 * | 4,12 | TECHNICAL FIELDS SEARCHED (Int.Cl.7) |
| Y | RIERA-PALOU F ET AL: "VARIABLE LENGTH EQUALIZERS FOR BROADBAND MOBILE SYSTEMS" VTC 2000-FALL. IEEE VTS 52ND. VEHICULAR TECHNOLOGY CONFERENCE. BOSTON, MA, SEPT. 24 - 28, 2000, IEEE VEHICULAR TECHNOLGY CONFERENCE, NEW YORK, NY: IEEE, US, vol. 5 OF 6. CONF. 52, 24 September 2000 (2000-09-24), pages 2478-2485, XP000988448 ISBN: 0-7803-6508-9<br>* section 4.3 * | 7,15 | H04L |

-----

The present search report has been drawn up for all claims

| Place of search | Date of completion of the search | Examiner |
|---|---|---|
| THE HAGUE | 10 June 2004 | Orozco Roura, C |

EPO FORM 1503 03.82 (P04C01)

**ANNEX TO THE EUROPEAN SEARCH REPORT
ON EUROPEAN PATENT APPLICATION NO.**

EP 03 07 8544

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2004

| Patent document cited in search report | | Publication date | Patent family member(s) | | Publication date |
|---|---|---|---|---|---|
| US 2002131537 | A1 | 19-09-2002 | WO | 02060143 A2 | 01-08-2002 |
| WO 0243270 | A | 30-05-2002 | AU | 1450902 A | 03-06-2002 |
| | | | EP | 1336261 A2 | 20-08-2003 |
| | | | WO | 0243270 A2 | 30-05-2002 |
| US 6522706 | B1 | 18-02-2003 | AU | 2357100 A | 26-06-2000 |
| | | | DE | 19982765 T0 | 22-11-2001 |
| | | | JP | 2002532964 T | 02-10-2002 |
| | | | WO | 0035159 A1 | 15-06-2000 |

EPO FORM P0459

For more details about this annex : see Official Journal of the European Patent Office, No. 12/82